# EUROPEAN PATENT APPLICATION

(11) **EP 0 759 388 A2**
(43) Date of publication of application: **26.02.1997**
(21) Application number: 95308171.8
(22) Date of filing: 15.11.1995
(51) Int. Cl.: B60T 8/36, B60T 8/42

(54) **A solenoid valve, and a modulator and an anti-lock brake system incorporating the solenoid valve**

(30) Priority: 18.08.1995 KR 9525383
(71) Applicant: DAEWOO ELECTRONICS CO., LTD, Seoul (KR)
(72) Inventor: You, Jang-Yeol, Seodaemoon-Ku, Seoul (KR)
(74) Representative: Needle, Jacqueline

(57) **Abstract**

A 2-position 3-way solenoid valve (100) has first, second and third ports (20, 30, 40) and first and second chambers (44, 46). The first chamber (44) is communicated with the first port (20), and the second chamber (46) is communicated with the second and third ports (30, 40). The chambers are partitioned by a barrier wall in the form of an inlet nozzle (34) and are communicated with each other by an opening (38) formed in the barrier wall. In response to a valve-actuating signal, a spool (42) is moved longitudinally of the valve such that the opening (38) and the third port (40) are opened alternatively. When the third port (40) is closed, hydraulic pressure is supplied to a brake wheel cylinder through the first and second ports (20, 30) to increase braking pressure. When the opening (38) is closed, the hydraulic pressure within the brake wheel cylinder is decreased through the second and third ports (30, 40) to decrease the braking pressure.

## Description

The present invention relates to a solenoid valve, and to a modulator and an anti-lock brake system with the solenoid valve. In particular, the invention relates to a 2-position 3-way (hereinafter simply referred to as "2/3") solenoid valve for an anti-lock brake system.

Anti-lock brake systems which prevent vehicle wheels from locking whilst performing a braking operation of the vehicle are widely utilized. If wheels are locked during the braking operation they slip on the road surface, and the friction force between the vehicle tyres and the road surface is reduced whereby the braking distance is lengthened. An anti-lock brake system repeatedly increases, holds or decreases the braking pressure exerted on the wheels to impede the locking of wheels. The increase of braking pressure is generally referred to as an increase mode, the hold thereof as a hold mode, and the decrease thereof as a decrease mode.

An anti-lock brake system may comprise a pressure generating source, which is not a master cylinder, for example, a pump and the like, valves operated by an electrical signal, sensors for monitoring the rotational speed of the wheels, and a controller for opening/closing the valves in accordance with a predetermined algorithm for the purpose of providing an effective braking operation.

In a substantially conventional anti-lock braking system two 2-position 2-way (hereinafter simply referred to as "2/2") solenoid valves are associated with each brake wheel cylinder. Such a system is stably operated, but two solenoid valves per channel are required. As a result, the utilized number of solenoid valves is increased and the overall anti-lock brake system becomes bulky.

In an alternative system, a 3-position 3-way (hereinafter simply referred to as "3/3") solenoid valve is associated with each brake wheel cylinder. In such a system, the utilized number of solenoid valves is decreased, since only one solenoid valve per channel is used. However, the structure of the solenoid valve is complicated, the size thereof is large, an electronic control unit of a complicated structure is required because of the need to perform a 2-step voltage control, and the response time becomes long. As a result, the system is operated unstably.

In order to overcome the foregoing problems, an anti-lock brake system is proposed in U.S.-A-4,865,399 comprising a hydraulic pump, 2/3 solenoid valves allotted to each wheel, and a control means. However, the system does not overcome the foregoing problems completely, since the number of valves utilized is not sufficiently decreased. In this respect, the system includes solenoid-operated isolation valves as well as the 2/3 solenoid valves. Thus, the overall construction of the system is complicated by the use of a plurality of solenoid-operated valves. Further, the construction of the 2/3 solenoid valve used in the system is complex, and so it is not easy to fabricate the valve.

A 2/3 solenoid valve is disclosed in U.S.-A-5,135,027. However, this valve is not for an anti-lock brake system but for a general-purpose hydraulic system. The valve has the construction that a port is closed by the movement of a ball caused by the flow of brake fluid, and hence, the ball moves by the pressure difference. In other words, the ball moves not by the movement of a plunger but by the pressure difference between ports, although electric power is applied to a solenoid coil to move the plunger against the resilient force of a spring. Therefore, if the pressure of an outlet port or an exhaust port is higher than that of an inlet port, the valve does not block backward flow. Furthermore, a solenoid valve for use in an anti-lock brake system requires a response time of 8 ms or below, whilst the response time of the proposed solenoid valve is long because the movement of the ball is caused by the pressure difference. Moreover, it is difficult to keep its response time constant because of fluctuations in the pressure difference of the fluid.

The present invention seeks to provide a solenoid valve in which the problems discussed above are reduced.

According to a first aspect of the present invention there is provided a solenoid value comprising a housing in which a chamber is enclosed, and having first, second, and third ports for communicating with said chamber, opening/closing means movable relative to said chamber to selectively control the communication between said ports and said chamber, and a solenoid assembly for moving said opening/closing means, wherein said chamber is divided into first and second chambers which are in communication by way of a first opening, and wherein said opening/closing means are movable to open said first opening and one of said first, second and third ports alternatively.

Preferably, said first opening is defined in an inlet nozzle arranged to partition said chamber to define said first and second chambers, and wherein the port opened alternatively with said first opening is a second opening formed in an outlet nozzle arranged in one of said first and second chambers opposite to said inlet nozzle.

In an embodiment, said opening/closing means comprise a reciprocable spool arranged to close said inlet nozzle and said outlet nozzle alternatively.

Preferably, a solenoid valve of the invention is arranged as a 2-position, 3-way valve, wherein said first port is a fluid receiving port, said second port enables fluid to flow in or out, and said third port is a fluid exhaust port, and wherein said opening/closing means are movable for alternatively opening and closing said first opening and said third port, and are positionable in a first position in which said third port is closed and said first opening is open, in a second position in which said first opening is closed and said third port is open.

Preferably, said second port is provided with an orifice for reducing pressure fluctuations, and a check valve.

The present invention also extends to a solenoid valve comprising:
a valve body having a housing with a first port for receiving fluid from a fluid generating source, a second port for flowing in/flowing out said fluid, and a third port for exhausting said fluid, and a cover hermetically coupled to one end of said housing for closing said one end of said housing;
a barrier wall for partitioning a chamber surrounded by said housing and cover within said valve body into first and second chambers and having a first opening for communicating said first chamber with said second chamber, said first chamber being communicated with said first port and said second chamber being communicated with said second and third ports;
opening/closing means movable along lengthwise direction of said valve body for alternatively opening and closing said first opening and said third port in response to an electric signal, and being positioned at a first position of closing said third port and opening said first opening in a normal state that said electric signal is not applied or at a second position of closing said first opening and opening said third port in an active state that said electric signal is applied, whereby said first port is communicated with said second port or said second port is communicated with said third port; and
a solenoid assembly having an annular solenoid coil, a bobbin wound by said annular solenoid coil and a pair of electrodes electrically connected to said annular solenoid coil and exposed to the outside of said valve body for moving said opening/closing means to said second position from said first position in response to said electric signal.

A solenoid valve according to an embodiment of the present invention is capable of rapid operation, has a simple structure and high reliability, and is capable of controlling opening/closing operations accurately.

According to a further aspect of the invention there is provided a 2-position 3-way solenoid valve having first, second and third ports and first and second chambers, wherein the first chamber is communicated with the first port and the second chamber is communicated with the second and third ports, said chambers being partitioned by a barrier wall and communicated with each other by an opening formed in the barrier wall, wherein, in response to a valve-actuated signal, a spool is moved in a lengthwise direction such that the opening and the third port are opened alternatively, wherein, when the third port is closed, hydraulic pressure is applied by way of the first and second ports, and wherein, when the opening is closed, the pressure is decreased through the second and third ports.

The present invention also extends to a solenoid valve comprising:-
a valve body having a housing with a first port for receiving fluid from a fluid generating source, a second port for flowing in/flowing out the fluid and a third port for exhausting the fluid, and a cover hermetically coupled to one end of the housing for closing the one end of the housing;
a barrier wall for partitioning a chamber surrounded by the housing and cover within the valve body into first and second chambers and having a first opening for communicating the first chamber with the second chamber, the first chamber being communicated with the first port and the second chamber being communicated with the second and third ports;
opening/closing means movable along lengthwise direction of the valve body for alternatively opening and closing the first opening and the third port in response to an electric signal, and being positioned at a first position of closing the third port and opening the first opening in a normal state that the electric signal is not applied or at a second position of closing the first opening and opening the third port in an active state that the electric signal is applied, whereby the first port is communicated with the second port or the second port is communicated with the third port; and
a solenoid assembly having an annular solenoid coil, a bobbin wound by the annular solenoid coil and a pair of electrodes electrically connected to the annular solenoid coil and exposed to the outside of the valve body for moving the opening/closing means to the second position from the first position in response to the electric signal.

In an embodiment, the solenoid valve further comprises an orifice for reducing the fluctuation of hydraulic pressure through the second port and a check valve for promptly reducing the hydraulic pressure within the second chamber.

Preferably, said check valve and said orifice are installed opposite to each other.

For example, said second port is composed of two holes which are pierced through said housing to be mutually opposite each other, said orifice and said check valve being installed in said holes.

The opening/closing means, for example, comprises an armature moving along the lengthwise direction in response to a magnetic force generated by the solenoid assembly; a cover spring, one end thereof supported on a closed end of a hole formed in the centre of a protrusion of the cover and the other end thereof supported on the armature; a spring supporting rod fixed to one end of the armature and inserted in the cover spring to support the cover spring; a push rod fixed to the other end of the armature; and a spool integrally formed with the push rod, wherein the cover, the spring supporting rod, the armature and the push rod are included within the first chamber, the spool is included within the second chamber, and the push rod extends through the first opening to be connected to the spool included within the second chamber.

Preferably, the barrier wall is formed by an inlet nozzle, the third port is a second opening formed at an outlet nozzle which is installed opposite to the inlet nozzle, and the diameter of the first opening formed at the inlet nozzle is larger than that of the push rod passing through the first opening to provide a gap between the first opening and the push rod, the gap communicating the first chamber with the second chamber.

In an embodiment, the first chamber is formed within the housing to be surrounded by the inlet nozzle, a protrusion formed in the centre of the cover and a cylindrical sealing member and the second chamber is formed within the housing to be surrounded by the inlet nozzle and the outlet nozzle.

The bobbin may be fitted along the circumference of the cylindrical sealing member, for example, the protrusion may be hermetically fitted in one end of the cylindrical sealing member, and the other end thereof hermetically coupled with an inner surface of the housing.

Preferably, an inlet valve seating surface and an outlet valve seating surface are formed on the inlet nozzle and the outlet nozzle respectively to seat the spool, and the inlet valve seating surface and the outlet valve seating surface are shaped to match with the spool, whereby the first opening or the second opening is closed, when the spool is seated on the inlet valve seating surface or the outlet valve seating surface.

In a preferred embodiment, the solenoid valve further comprises a bushing provided between the armature and the barrier wall for supporting the push rod.

The present invention also extends to a solenoid valve comprising:-
a valve body having a housing with a first port for receiving fluid from a fluid generating source, a second port for flowing in/flowing out said fluid and a third port for exhausting said fluid, and a cover hermetically coupled to one end of said housing for closing said one end of said housing;
a barrier wall for partitioning a chamber surrounded by said housing and cover within said valve body into first and second chambers and having a first opening for communicating said first chamber with said second chamber, said first chamber being communicated with said first port and said second chamber being communicated with said second and third ports;
opening/closing means movable along lengthwise direction of said valve body for alternatively opening and closing said first opening and said third port in response to an electric signal, and being positioned at a first position of closing said third port and opening said first opening in a normal state that said electric signal is not applied or at a second position of closing said first opening and opening said third port in an active state that said electric signal is applied, whereby said first port is communicated with said second port or said second port is communicated with said third port; and
a solenoid assembly having an annular solenoid coil, a bobbin wound by said annular solenoid coil and a pair of electrodes electrically connected to said annular solenoid coil and exposed to the outside of said valve body for moving said opening/closing means to said second position from said first position in response to said electric signal,
wherein said second port is composed of two holes which are formed through said housing to be mutually opposite each other and an orifice for reducing the fluctuation of hydraulic pressure through said second port and a check valve for promptly reducing the hydraulic pressure within said second chamber are each further installed in said holes,
wherein said opening/closing means comprises:
an armature moving along said lengthwise direction in response to a magnetic force generated by said solenoid assembly;
a cover spring, one end thereof supported on a closed end of a hole formed in the center of a protrusion of said cover and the other end thereof supported on said armature;
a spring supporting rod fixed to one end of said armature and inserted in said cover spring to support said cover spring;
a push rod fixed to the other end of said armature; and
a spool integrally formed with said push rod,
wherein said cover, said spring supporting rod, said armature and said push rod are included within said first chamber, said spool is included within said second chamber, and said push rod extends through said first opening to be connected to said spool included within said second chamber,
wherein said barrier wall is formed by an inlet nozzle, said third port is a second opening formed at an outlet nozzle which is installed opposingly to said inlet nozzle, and the diameter of said first opening formed at said inlet nozzle is larger than that of said push rod passing through said first opening to provide a gap between said first opening and said push rod, said gap communicating said first chamber with said second chamber,
wherein said first chamber is formed within said housing to be surrounded by said inlet nozzle, a protrusion formed in the center of said cover and a cylindrical sealing member and said second chamber is formed within said housing to be surrounded by said inlet nozzle and said outlet nozzle, and
wherein said bobbin is fitted along the circumference of said cylindrical sealing member, said protrusion is hermetically fitted in one end of said cylindrical sealing member, and the other end thereof is hermetically coupled with an inner surface of said housing,
wherein an inlet valve seating surface and an outlet valve seating surface are formed on said inlet nozzle and said outlet nozzle respectively to seat said spool, and said inlet valve seating surface and said outlet valve seating surface are shaped to match with said spool, whereby said first opening or said second opening is closed, when said spool is seated on said inlet valve seating surface or said outlet valve seating surface,
further comprising a bushing provided between said armature and said barrier wall for supporting said push rod.

The present invention also extends to a modulator for an anti-lock braking system comprising four solenoid valves, whrein each of said solenoid valves is as defined above.

The modulator preferably further comprises an electric motor, and first and second pumps driven by said electric motor.

According to a further aspect of the invention there is provided a modulator for anti-lock brake system comprising an electric motor;
first and second pumps driven by the electric motor and provided into a modulator block;
first, second, third and fourth solenoid valves installed into the modulator block for intermitting the fluid flow in response to an electric signal;
first and second dampers provided into the modulator block to be communicated with the respective outlets of the first and second pumps for temporarily receiving the fluid flowing out from the first and second pumps to reduce the fluctuation of hydraulic pressure generated from the first and second pumps; and
first and second accumulators provided into the modulator block to be communicated with the respective inlets of the first and second pumps for temporarily receiving the fluid flowing out from the first and second solenoid valves and the third and fourth solenoid valves to reduce the hydraulic pressure within the first to fourth solenoid valves promptly,
wherein each of the first to fourth solenoid valves comprises:
a valve body having a housing with a first port for receiving fluid from a fluid generating source, a second port for flowing in/flowing out the fluid and a third port for exhausting the fluid, and a cover hermetically coupled to one end of the housing for closing the one end of the housing;
a barrier wall for partitioning a chamber surrounded by the housing and cover within the valve body into first and second chambers and having a first opening for communicating the first chamber with the second chamber, the first chamber being communicated with the first port and the second chamber being communicated with the second and third ports;
opening/closing means movable along lengthwise direction of the valve body for alternatively opening and closing the first opening and the third port in response to an electric signal, and being positioned at a first position of closing the third port and opening the first opening in a normal state that the electric signal is not applied or at a second position of closing the first opening and opening the third port in an active state that the electric signal is applied, whereby the first port is communicated with the second port or the second port is communicated with the third port; and
a solenoid assembly having an annular solenoid coil, a bobbin wound by the annular solenoid coil and a pair of electrodes electrically connected to the annular solenoid coil and exposed to the outside of the valve body for moving the opening/closing means to the second position from the first position in response to the electric signal.

Preferably, three O-rings are provided along the circumference of the first to fourth solenoid valves to maintain the hermetical state between the first to third ports while the first to fourth solenoid valves are installed, whereby the installation of the first to fourth solenoid valves is completed only by inserting them into cylinders for a valve formed in the modulator block.

Preferably, each of the first and second dampers is formed by a cylinder for a damper and a cover for a damper in the modulator block, and each of the first and second accumulators is formed by a cylinder for an accumulator, a cover for an accumulator and a spring for accumulator in the modulator block.

In an embodiment, wherein said second port is composed of two holes which are pierced through said housing to be mutually opposite each other and an orifice for reducing the fluctuation of hydraulic pressure through said second port and a check valve for promptly reducing the hydraulic pressure within said second chamber are each further installed in said holes.

Embodiments of a modulator of the invention have a simple structure, and a small size. The modulator is preferably utilised in an anti-lock brake system and uses 2/3 solenoid valves.

The present invention also extends to an anti-lock braking system for a vehicle having at least one wheel provided with a wheel brake, and means to control the pressure of said wheel brake, wherein said pressure controlling means comprises a solenoid valve as defined above.

In an embodiment, said anti-lock braking system further comprises a master cylinder arranged to supply brake fluid to activate the wheel brake, said solenoid valve communicating with said master cylinder to control the pressure of the fluid supplied by said master cylinder, and wherein said pressure controlling means further comprises control means arranged to apply control signals to said solenoid valve in response to the speed of said wheel.

The invention also extends to an anti-lock brake system for a vehicle having at least one wheel provided with a wheel brake, a brake pedal operable by the vehicle driver and a master cylinder actuated by the brake pedal and having an outlet connected to supply brake fluid to actuate the wheel brake, the system comprising:
a wheel speed sensor provided to the wheel for sensing the speed of wheel;
a pressure generating portion including an electric motor and at least one pump driven by the electric motor and having an inlet and an outlet;
a 2-position 3-way solenoid valve having a first port communicated with both the outlet of the pump and the master cylinder, a second port communicated with the brake wheel cylinder and a third port communicated with the inlet of the pump, the valve only movable between a first position wherein the first and second ports are communicated with each other to increase the pressure of the brake wheel cylinder and a second position wherein the second and third ports are communicated with each other to decrease the pressure of the brake wheel cylinder;
a damper communicated with the outlet of the pump for temporarily receiving the brake fluid flowing out from the pump to reduce the fluctuation of hydraulic pressure generated therefrom;
an accumulator communicated with the inlet of the pump for temporarily receiving the fluid flowing out from the 2-position 3-way solenoid valve to reduce the hydraulic pressure within the 2-position 3-way solenoid valve promptly; and
control means for controlling the operation of the 2-position 3-way solenoid valve to increase, decrease or hold pressure of the brake wheel cylinder, the control means receiving a speed signal from the wheel speed sensor and outputting a valve-actuated signal having a predetermined time period to the solenoid valve whereby the solenoid valve is maintained in the first position or the second position during the predetermined time period in response to the valve-actuated signal,
the 2-position 3-way solenoid valve comprising:
a valve body having a housing with the first port for receiving fluid from the pressure generating portion, the second port for flowing in/flowing out the fluid and the third port for exhausting the fluid, and a cover hermetically coupled to one end of the housing for closing the one end of the housing;
a barrier wall for partitioning a chamber surrounded by the housing and cover within the valve body into first and second chambers and having a first opening for communicating the first chamber with the second chamber, the first chamber being communicated with the first port and the second chamber being communicated with the second and third ports;
opening/closing means movable along lengthwise direction of the valve body for alternatively opening and closing the first opening and the third port in response to an electric signal, and being positioned at the first position of closing the third port and opening the first opening in a normal state that the electric signal is not applied or at the second position of closing the first opening and opening the third port in an active state that the electric signal is applied, whereby the first port is communicated with the second port or the second port is communicated with the third port; and
a solenoid assembly having an annular solenoid coil, a bobbin wound by the annular solenoid coil and a pair of electrodes electrically connected to the annular solenoid coil and exposed to the outside of the valve body for moving the opening/closing means to the second position from the first position in response to the electric signal.

The valve-actuated signal may be a pulse-width-modulation signal or a bang-bang control signal.

In an embodiment, said second port is composed of two holes which are pierced through said housing to be mutually opposite each other and an orifice for reducing the fluctuation of hydraulic pressure through said second port and a check valve for promptly reducing the hydraulic pressure within said second chamber are each further installed in said holes.

An anti-lock brake system of an embodiment of the invention has the advantage of utilising only one 2/3 solenoid valve per channel.

In a 2/3 solenoid valve of an embodiment of the invention, the first and second ports are communicated with each other when the solenoid coil is de-energized as the the spool closes the third port by a resilient force, for example, provided by a spring. When the solenoid coil is energized, the spool is retracted by overcoming the resilient force to open the third port and close the first port, so that the second and third ports are communicated with each other.

A 2/3 solenoid valve of an embodiment of the invention is simply constructed and has a reduced number of component parts. The possibility of operational errors thus becomes low to enhance the reliability of operation. Also, the response time of the 2/3 solenoid valve becomes short, so that an anti-lock brake system having a good performance can be constructed.

A modulator of an embodiment of the invention is provided with four 2/3 solenoid valves and serves for generating hydraulic pressure and intermitting the flow of brake fluid in response to control signals from control means.

The exemplified modulator may be assembled easily and has a compact design capable of reducing the installation space of the modulator and the weight thereof, and hence, can be fabricated at a low cost.

An anti-lock brake system of an embodiment of the invention may start to operate on the basis of a speed signal from a wheel speed sensor when a driver steps on the brake pedal. In an increase mode, hydraulic pressure generated from a pump is supplied to a brake wheel cylinder through first and second ports of a 2/3 solenoid valve. At this time, the solenoid coil is de-energized as the 2/3 solenoid valve is preferably a normally open type. In a decrease mode, the solenoid coil is energized to close the first port and communicate the second port with the third port. If the second and third ports are communicated with each other, some of the fluid stored in the brake wheel cylinder is transmitted to an accumulator through the third port, so that the braking pressure is reduced. A hold mode is provided by repeating the opening/closing of the 2/3 solenoid valve under a PWM signal control or bang-bang control.

An exemplified anti-lock brake system is simply constructed to reduce the possibility of erroneous operation, and one 2/3 solenoid valve is assigned to each channel so that the number of solenoid driven valves is reduced. Therefore, the anti-lock brake system has reliable braking characteristics.

Embodiments of the present invention will hereinafter be described, by way of example, with reference to the accompanying drawings in which:-
Figure 1A is a schematic view showing a hydraulic system of a substantially conventional anti-lock brake system utilizing a 2/2 solenoid valve;
Figure 1B is a schematic view showing a hydraulic system of a substantially conventional anti-lock brake system utilizing a 3/3 solenoid valve;
Figure 2 is a sectional view of a 2/3 solenoid valve of a first embodiment of the present invention;
Figure 3 is a sectional view of a 2/3 solenoid valve of a second embodiment of the present invention;
Figure 4 is a perspective view showing the inner structure of a modulator for an anti-lock brake system provided with a 2/3 solenoid valve of the present invention;
Figure 5 is a hydraulic circuit diagram of a modulator of the present invention;
Figure 6 is an exploded view of a modulator of the present invention;
Figure 7 is a constructional view of an anti-lock brake system provided with a 2/3 solenoid valve of the present invention;
Figure 8 is a graph showing the change of the pressure of a brake wheel cylinder with the lapse of time acquired by testing an anti-lock brake system provided with a 2/3 solenoid valve of Figure 2; and
Figure 9 is a graph showing the change of the pressure of a brake wheel cylinder with the lapse of time acquired by testing an anti-lock brake system provided with a 2/3 solenoid valve of Figure 3.

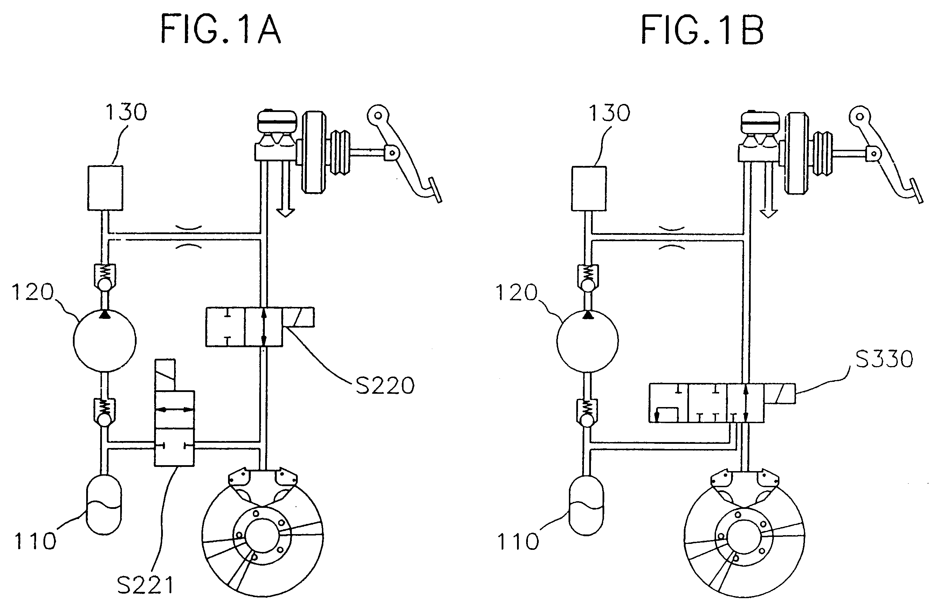

Figure 1A is a schematic hydraulic circuit diagram showing a substantially conventional anti-lock brake system utilizing a 2-position 2-way (hereinafter simply referred to as "2/2") solenoid valves. In an increase mode, first and second 2/2 solenoid valves S220 and S221 are de-energized to open the first valve S220, which is connected to an outlet of a hydraulic pump 120, and to close the second valve S221 which is connected to an inlet of the hydraulic pump 120. In this condition, hydraulic pressure generated from the hydraulic pump 120 is supplied to a brake wheel cylinder mounted to the wheels. In a hold mode, the first valve S220 is energized to close first valve S220, so that the pressure of the brake wheel cylinder is maintained constant. In a decrease mode, the first and second valves S220 and S221 are energized to close the first valve S220 and to open the second valve S221, so that the pressure of the brake wheel cylinder is decreased. Such a system is stably operated, but two solenoid valves per channel are required. As a result, the utilized number of solenoid valves is increased and the overall anti-lock brake system becomes bulky.

Figure 1B shows a schematic hydraulic circuit diagram for a substantially conventional anti-lock brake system which utilises a 3-position 3-way (hereinafter simply referred to as "3/3") solenoid valve. In an increase mode, a 3/3 solenoid valve S330 is de-energized, so that a hydraulic pressure generated from a hydraulic pump 120 is supplied to the brake wheel cylinder to increase the braking pressure. In a hold mode, a primary switching signal is applied to the 3/3 solenoid valve S330 to close all three ports thereof, so that the pressure of the brake wheel cylinder is maintained constant. In a decrease mode, a secondary switching signal, of which the voltage is about twice that of the primary switching signal, is applied to decrease the pressure of the brake wheel cylinder. In such a system, the number of solenoid valves used is decreased, since only one solenoid valve per channel is utilized. However, the structure of the solenoid valve is complicated, the size thereof is large, an electronic control unit of a complicated structure is required because of the need to perform a 2-step voltage control, and the response time becomes long. As a result, the system is operated unstably.

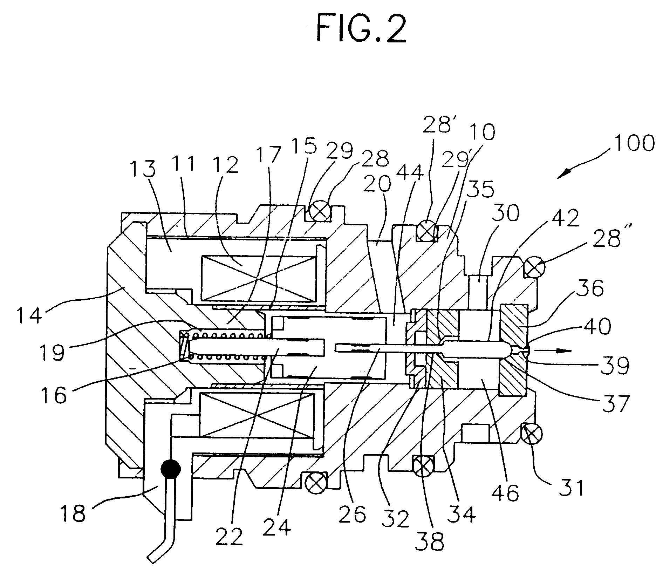

An embodiment of a 2/3 solenoid valve of the invention is illustrated in Figure 2. As can be seen, a 2/3 solenoid valve 100 has a valve body 10 and a cover 14 hermetically coupled with one end of the valve body 10. Within valve body 10, a first chamber 44 and a second chamber 46 are provided. In the first chamber 44 there is a space enclosed by the cover 14 and by an inlet nozzle 34. The second chamber 46 has a space enclosed by the inlet nozzle 34 and by an outlet nozzle 36.

A cover spring 16, a spring supporting rod 22, an armature 24, a push rod 26 and a bushing 32 are included within the first chamber 44. One end of cover spring 16 is supported by the cover 14 and the other end thereof is supported by the armature 24 with the spring supporting rod 22 inserted. Spring supporting rod 22 is fixed in the centre of one end of the armature 24 and serves as a supporting/guiding means for the cover spring 16. Armature 24 is made of ferromagnetic material(s) and may be made of the same material(s) as the valve body 10. At the other end of the armature 24, the push rod 26 is fixed.

Push rod 26 extends through the bushing 32 and the inlet nozzle 34, and a spool 42 is integrally provided at one end of push rod 26. Push rod 26 is fabricated with the armature 24 by pressing. Bushing 32 serves for supporting the push rod 26 and is provided with through holes through which fluid passes as well as with an opening through which the push rod 26 is inserted. The shape and number of the through holes may be chosen as required as long as the solenoid valve is operated smoothly. Spool 42 reciprocates axially to open and close the inlet nozzle 34 or the outlet nozzle 36 alternatively. Push rod 26 and spool 42 are manufactured by cold rolling, for example, and preferably, have a Rockwell hardness of 60 to 65. One end of spool 42 landing on an outlet valve seating surface 37 has a hemispherical shape, and outlet valve seating surface 37 is shaped to match with the one end of the spool 42 landing thereon.

The diameter of an inlet nozzle hole 38 is larger than that of push rod 26 passing therethrough, so that a gap is formed between the inlet nozzle hole 38 and the push rod 26. Through the gap, the first and second chambers 44 and 46 are communicated with each other. An inlet valve seating surface 35 formed on the inlet nozzle 34 is shaped to match with the other end of spool 42 landing thereon, so that fluid flow through the inlet nozzle 34 is blocked by the landing of the spool 42.

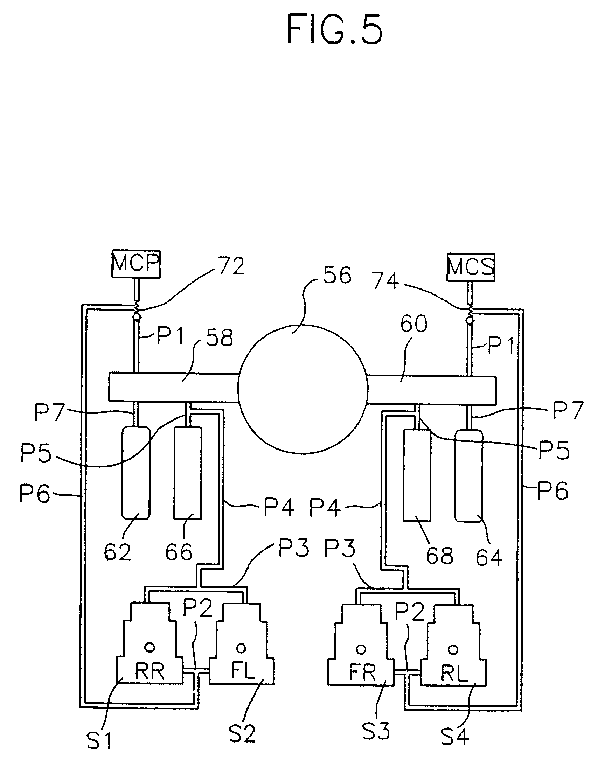

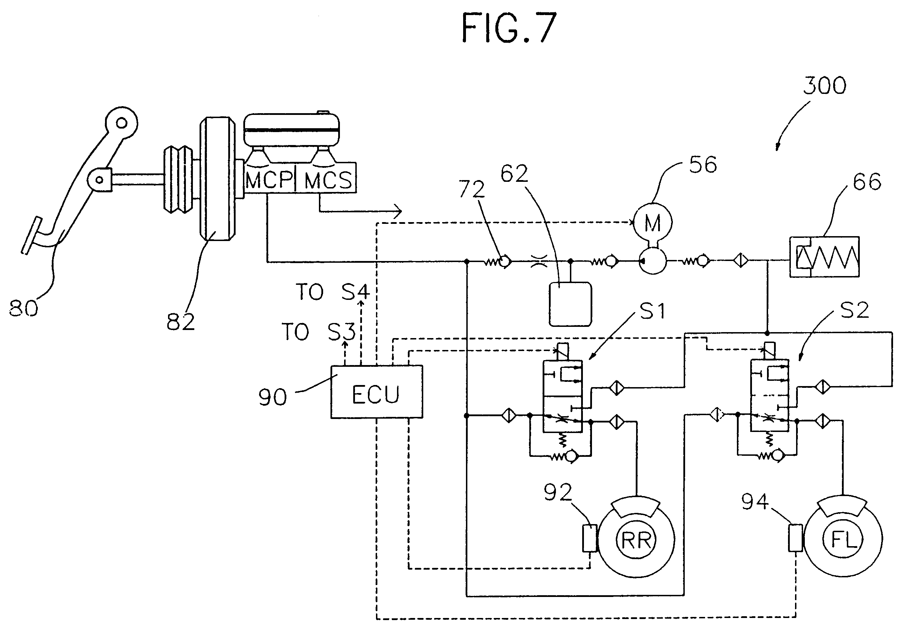

The 2/3 solenoid valve 100 has a first port 20, a second port 30 and a third port 40, the first port 20 being communicated with the first chamber 44, and the second and third ports 30 and 40 communicating with the second chamber 46. The third port 40 is not formed in the valve body 10 but is provided in the outlet nozzle 36 as an outlet nozzle hole 39. First port 20 communicates with a master cylinder 82 (see Figure 7) of a vehicle brake system, the second port 30 communicates with brake wheel cylinders (not shown) mounted on each wheel, and the third port 40 communicates with an accumulator 66 or 68 (see Figure 5).

In a normal state, in which electric power is not supplied, the spool 42 remains landed on the outlet valve seating surface 37 to close the third port 40, since the 2/3 solenoid valve 100 is a normally open type. Thus, in the normal state, the braking pressure generated from the master cylinder 82 is provided to the brake wheel cylinder through first port 20, first chamber 44, inlet nozzle 34, second chamber 46 and second port 30. When a solenoid coil 12 is energized, the magnetic flux generated from a solenoid assembly 11 permits the armature 24 to overcome the resilient force of the cover spring 16, so that armature 24 is retracted towards the cover 14. Accordingly, the spool 42 is forced to land on inlet valve seating surface 35 formed on inlet nozzle 34 after being separated from outlet valve seating surface 37 formed on outlet nozzle 36, so that spool 42 is in a closing position to close the inlet nozzle 34. When the spool 42 is in the closing position, first port 20 is closed, third port 40 is open, and the second and third ports 30 and 40 are in communication with each other.

The solenoid assembly 11 is composed of an annular solenoid coil 12 and a bobbin 13 wound with solenoid coil 12. Bobbin 13 is integrally formed by moulding, for example, in order to prevent fluid from intruding into the solenoid coil 12 wound in the bobbin 13. Furthermore, the solenoid assembly 11 is fitted on the circumference of a cylindrical sealing member 15, which acts to protect the solenoid assembly 11 from fluid in the first chamber 44 by sealing the first chamber 44. Cylindrical sealing member 15 comprises non-magnetic material(s) so as to block magnetic flux generated from the solenoid assembly 11. Electric terminals 18 are exposed to the exterior of the valve body 10 and connected with conductive wires each to energize the solenoid coil 12.

A protrusion 17 of the cover 14 is inserted in one end of cylindrical sealing member 15 in order to prevent fluid leakage. Protrusion 17 is shaped cylindrically to be fitted in the inner surface of sealing member 15, and at the centre of protrusion 17 a hole 19, of which one end is closed, is formed to insert the cover spring 16. One end of cover spring 16 is supported on the closed end of hole 19 and the other end thereof is supported on armature 24. Hence, the armature 24 is pressed towards bushing 32 by a predetermined force.

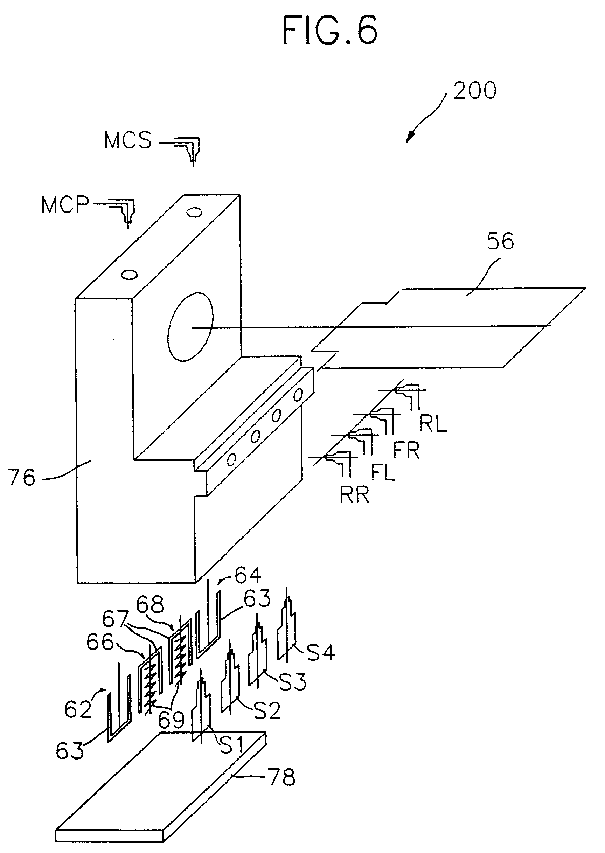

First, second and third O-rings 28, 28' and 28'' are provided to first and second substantially U-shaped grooves 29 and 29' and to a substantially L-shaped groove 31 formed on the outer surface of valve body 10 to coaxially surround the valve body 10. The first, second and third O-rings 28, 28' and 28'' are provided for maintaining the hermetic state of the first, second and third ports 20, 30 and 40 when the solenoid valve 100 is installed in a modulator block 76 (shown Figure 6) of an anti-lock brake system. Accordingly, when the solenoid valve 100 is installed in the modulator block 76, a space has a substantially equal pressure, the space being communicated with first port 20 and surrounded by first and second O-rings 28 and 28' mounted on each of first and second U-shaped grooves 29 and 29', modulator block 76 and valve body 10. Also, a space has a substantially equal pressure, the space being communicated with second port 30 and surrounded by second O-ring 28' mounted on second U-shaped groove 29', third O-ring 28'' mounted on L-shaped groove 31, modulator block 76 and valve body 10. Further, a space has a substantially equal pressure, the space being communicated with third port 40 and surrounded by third O-ring 28'' mounted on L-shaped groove 31, modulator block 76, valve body 10 and outlet nozzle 36.

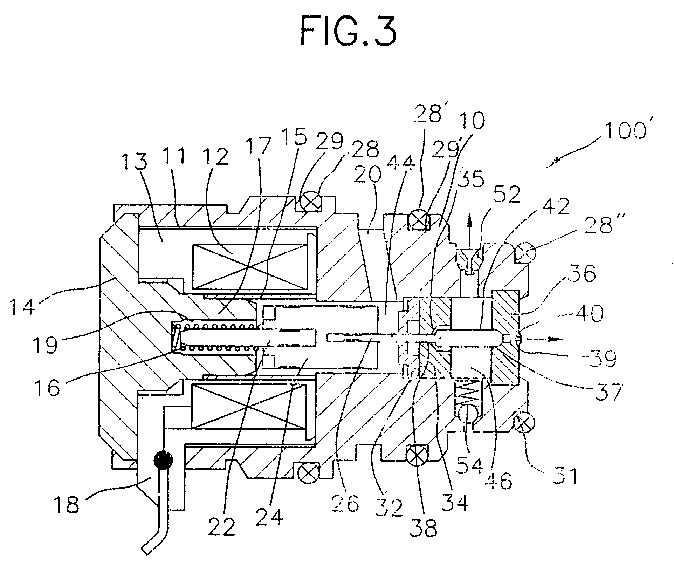

In Figure 3, a 2/3 solenoid valve 100' of a further embodiment of the invention is shown. In Figure 3, the same reference numerals have been used as in Figure 2 to represent the same or similar features.

The solenoid valve shown in Figure 3 is substantially the same as that of Figure 2, except that in the value of Figure 3 an orifice 52 and a first check valve 54 are additionally provided. Orifice 52 and first check valve 54 are mounted in second port 30, preferably, with the opposing positional relationship between each other. The hydraulic pressure generated from a generating source is supplied only through orifice 52. By a drop in pressure induced by passing fluid through the orifice 52, the fluctuation of hydraulic pressure in the brake wheel cylinder is almost removed. First check valve 54 serves for shortening the operating time of the 2/3 solenoid valve 100' by the prompt passage of the fluid, when second and third ports 30 and 40 are communicated with each other to transmit fluid from the second port 30 to the third port 40.

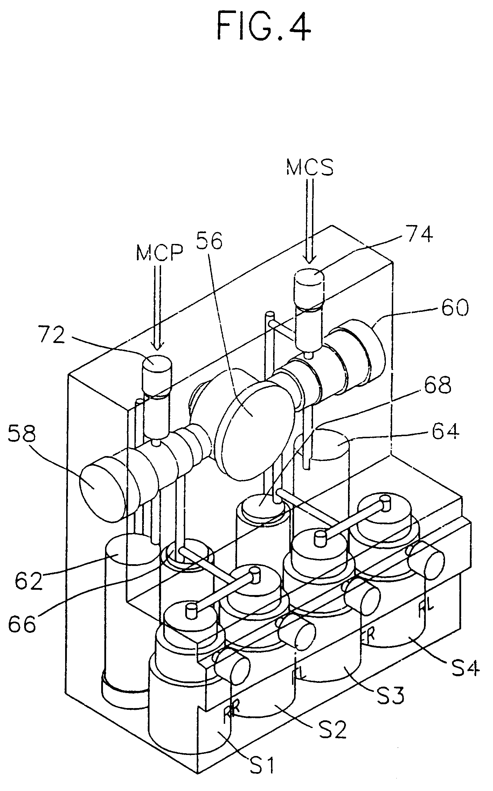

Figures 4 to 6, illustrate a modulator 200 for an anti-lock brake system which is provided with 2/3 solenoid valves 100 or 100'. In Figures 4 to 6, Sl, S2, S3 and S4 designate first, second, third and fourth solenoid valves and each of these valves may be a 2/3 solenoid valve as shown in Figure 2 or Figure 3.

In modulator block 76, a plurality of fluid passages are formed for connecting each of constituents to transmit the fluid therebetween. As shown in Figure 5, first passages Pl and Pl communicate a primary master cylinder MCP and a secondary master cylinder MCS with the outlets of first and second pumps 58 and 60, respectively.

At each of branching points of first passages Pl and Pl towards sixth passages P6 and P6, second and third check valves 72 and 74 are provided in order that the hydraulic pressure generated from primary and secondary master cylinders MCP and MCS are not provided to the outlet of first and second pumps 58 and 60.

First ports 20 and 20 of first and second solenoid valves Sl and S2 are communicated with each other by one second passage P2, and first ports 20 and 20 of third and fourth solenoid valves S3 and S4 are communicated with each other by the other second passage P2. Third ports 40 and 40 of first and second solenoid valves Sl and S2 are communicated with each other by one third passage P3, and third ports 40 and 40 of third and fourth solenoid valves S3 and S4 are communicated with each other by the other third passage P3.

First and second accumulators 66 and 68 are communicated with the inlet of each of first and second pumps 58 and 60 by fifth passages P5 and P5, and first and second dampers 62 and 64 are communicated with the outlet of each of first and second pumps 58 and 60 by seventh passages P7 and P7.

Second passages P2 and P2 are connected to third passages P3 and P3 by fourth passages P4 and P4, and first passages Pl and Pl are connected to second passages P2 and P2 by sixth passages P6 and P6.

In modulator block 76, first, second, third and fourth solenoid valves Sl, S2, S3 and S4 are installed to intermittently provide the hydraulic pressure generated from first and second pumps 58 and 60 to four wheels RR, FL, FR and RL. The installation of first, second, third and four solenoid valves Sl, S2, S3 and S4 is completed only by inserting them into valve-installing cylinders formed in modulator block 76, since each of first, second, third and fourth solenoid valves Sl, S2, S3 and S4 is provided with first, second and third O-rings 28, 28' and 28'' (see FIG. 2) to maintain the hermetic state between the ports when installing.

First and second dampers 62 and 64 are composed of cylinders (not shown) for a damper formed in modulator block 76 and a pair of damper covers 63, and first and second accumulators 66 and 68 are composed of cylinders (not shown) for an accumulator formed in modulator block 76, a pair of accumulator covers 67 and a pair of accumulator springs 69.

First and second dampers 62 and 64 retain temporarily the fluid flowing out of the outlet of first and second pumps 58 and 60 to reduce the fluctuation of hydraulic pressure caused by the first and second pumps 58 and 60.

When the fluid within the second chambers 46 of first and second solenoid valves Sl and S2 flows out of third ports 40 thereof to reduce the hydraulic pressure of brake wheel cylinder, the first accumulator 66 retains temporarily the fluid flowing out of third ports 40, so that the hydraulic pressure of second chamber 46 of first and second solenoid valves Sl and S2 is reduced promptly. When the fluid within second chambers 46 of third and fourth solenoid valves S3 and S4 flows out of third ports 40 thereof to reduce the hydraulic pressure of brake wheel cylinder, the second accumulator 68 retains temporarily the fluid flowing out of third ports 40, so that the hydraulic pressure of second chamber 46 of third and fourth solenoid valves S3 and S4 is reduced promptly.

The hydraulic pressure generated from first pump 58 is provided to first ports 20 of first and second solenoid valves Sl and S2 through first passage Pl, second check valve 72, sixth passage P6 and second passage P2. The hydraulic pressure generated from second pump 60 is provided to first ports 20 of third and fourth solenoid valves S3 and S4 through first passage Pl, third check valve 74, sixth passage P6 and second passage P2.

Figure 7 is a constructional view of an anti-lock brake system 300 composed of a 2/3 solenoid valve 100 or 100' and a modulator 200.

Anti-lock brake system 300 is for the brake system of the diagonal split type in which one front wheel and the diagonally opposite rear wheel are assigned to each of two master cylinders, but it is not limited to this type. To promote the understanding, FIG. 7 shows only the hydraulic pressure circuit diagram including primary master cylinder MCP and rear right and front left wheels RR and FL.

On wheel RR and FL, first and second wheel speed sensors 92 and 94 are installed respectively and the speed signal outputted therefrom is inputted to an ECU 90 for controlling the operation of anti-lock brake system 300. First, second, third and fourth solenoid valves Sl, S2, S3 and S4 and a motor for driving first and second pumps 58 and 60 are connected to the output of ECU 90.

The operation of a 2/3 solenoid valve as illustrated in Figure 2 or 3 and of the illustrated anti-lock brake system will now be described.

In a normal state in which the anti-lock brake system is not operated, the hydraulic pressure generated from primary and secondary master cylinders MCP and MCS is provided to the brake wheel cylinders, each of which is installed on a respective one of the four wheels RR, FL, FR and RL, after passing through first and second ports 20 and 30 successively, if a driver steps on a brake pedal 80. When the anti-lock brake system 300 is operated, a motor driving signal is outputted from ECU 90 to drive motor 56 and a valve opening/closing signal is outputted,from ECU 90 to open/close first and third ports 20 and 30 of each of first, second, third and fourth solenoid valves Sl, S2, S3 and S4 according to a predetermined algorithm stored in the ECU 90, whereby the braking pressure is increased, held or decreased.

In an increase mode, the hydraulic pressure generated from first and second pumps 58 and 60 is provided to first passages Pl and Pl and thereafter, passes through the same path as in the normal state when the anti-lock brake system is not operated, so that the braking pressure is increased. Since a 2/3 solenoid valve of the invention is generally a normally open type, in the de-energized state of the solenoid coil 12, the spool 42 is landed on the outlet valve seating surface 37 by the resilient force of cover spring 16 to close third port 40. Hence, the hydraulic pressure generated from first and second pumps 58 and 60 is provided to the brake wheel cylinders via the same path as in the normal state. Each of first and second dampers 62 and 64 is disposed at the outlet of first and second pumps 58 and 60 to reduce the fluctuation caused by the pumping operation of first and second pumps 58 and 60.

In a decrease mode, solenoid coil 12 is energized to generate the magnetic flux, so that armature 24 overcomes the resilient force of cover spring 16 to be retracted towards cover 14. Spool 42 is separated from outlet valve seating surface 37 and landed on inlet valve seating surface 35, so that third port 40 is opened and first port 20 is closed. Therefore, the fluid in the brake wheel cylinder is exhausted towards first and second accumulators 66 and 68 through second and third ports 30 and 40, thereby decreasing the braking pressure.

A hold mode is performed by operating spool 42 repetitively by means of pulse width modulation or of a bang-bang control. If solenoid coil 12 is energized and de-energized, repetitively, first and second ports 20 and 30 are opened/closed repetitively by the movement of spool 42, thereby keeping the braking pressure constant.

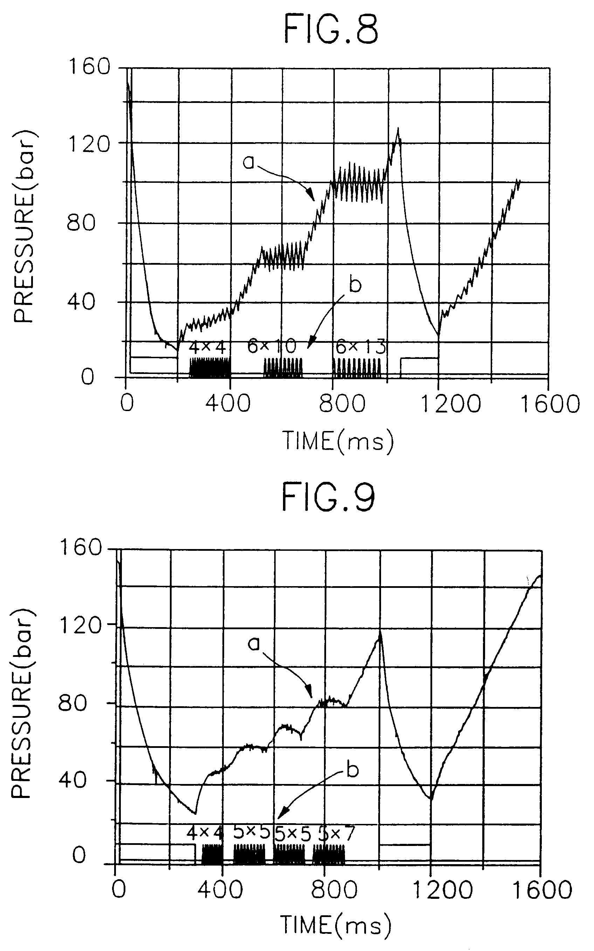

Figure 8 is a graph showing the relationship between the pressure of the brake wheel cylinder and time, the graph being acquired by testing an anti-lock brake system 300 provided with a 2/3 solenoid valve 100 as shown in Figure 2. Figure 9 is a graph showing the relationship between the pressure of the brake wheel cylinder and time, the graph having been acquired by testing an anti-lock brake system 300 provided with a 2/3 solenoid valve 100' as shown in Figure 3.

In each of the graphs shown in Figures 8 and 9, the horizontal axis is a time axis and the vertical axis is a pressure axis. Further, "a" represents the change of the pressure in brake wheel cylinder and "b" represents the waveform of the signal supplied to the solenoid valve. As shown, the increase mode is accomplished by an OFF signal, the decrease mode is accomplished by an ON signal, and the hold mode is accomplished by pulse-width modulation signal in which ON and OFF signals are repeated with a predetermined time period.

In Figure 8, it can be seen that a fluctuation of about 10 to 20 bar takes place in the hold mode, and that a fluctuation of about 5 to 10 bar takes place in the increase mode. The fluctuations may induce trouble for the master cylinder and the unstable operation of anti-lock brake system. As shown in Figure 9, the fluctuations are almost removed by utilizing a 2/3 solenoid valve 100' as shown in Figure 3.

A 2/3 solenoid valve of the invention is simply constructed and has a reduced number of component parts. As a result, the possibility of operational errors becomes low whereby the reliability of operation is enhanced. In addition, the response time of the 2/3 solenoid valve becomes short, so that an anti-lock brake system having a good performance can be constructed.

A modulator as described and illustrated can be assembled easily, has a compact design capable of reducing the installation space of the modulator and the weight thereof, and hence, can be fabricated at a low cost.

An anti-lock brake system of the invention is simply constructed to reduce the possibility of erroneous operation, and a single 2/3 solenoid valve is assigned to each channel so that the number of solenoid driven valves is reduced. Therefore, the anti-lock brake system has a reliable braking characteristic.

Whilst the present invention has been particularly shown and described with reference to particular embodiments thereof, it will be understood that various changes and modifications may be made to the embodiments illustrated without departing from the scope of the invention as defined by the appended claims.

## Claims

1. A solenoid valve (100, 100') comprising a housing (10, 14) in which a chamber (44, 46) is enclosed, and having first, second, and third ports (20, 30, 40) for communicating with said chamber (44, 46), opening/closing means (22, 24, 26, 32, 34, 42) movable relative to said chamber (44, 46) to selectively control the communication between said ports (20, 30, 40) and said chamber (44, 46), and a solenoid assembly (11) for moving said opening/closing means, wherein said chamber is divided into first and second chambers (44, 46) which are in communication by way of a first opening (38), and wherein said opening/closing means (22, 24, 26, 32, 34, 42) are movable to open said first opening (38) and one of said first, second and third ports (20, 30, 40) alternatively.

2. A solenoid valve as claimed in Claim 1, wherein said first opening (38) is defined in an inlet nozzle (34) arranged to partition said chamber (44, 46) to define said first and second chambers, and wherein the port (40) opened alternatively with said first opening (38) is a second opening (39) formed in an outlet nozzle (38) arranged in one of said first and second chambers (44, 46) opposite to said inlet nozzle (34).

3. A solenoid valve as claimed in Claim 2, wherein said opening/closing means (22, 24, 26, 32, 34, 42) comprise a reciprocable spool (42) arranged to close said inlet nozzle (34) and said outlet nozzle (38) alternatively.

4. A solenoid valve as claimed in any preceding claim, arranged as a 2-position, 3-way valve, wherein said first port (20) is a fluid receiving port, said second port (30) enables fluid to flow in or out, and said third port (40) is a fluid exhaust port, and wherein said opening/closing means (22, 24, 26, 32, 34, 42) are movable for alternatively opening and closing said first opening (38) and said third port (40), and are positionable in a first position in which said third port is closed and said first opening (38) is open, in a second position in which said first opening (38) is closed and said third port (40) is open.

5. A solenoid valve as claimed in any preceding claim, wherein said second port (30) is provided with an orifice (52) for reducing pressure fluctuations, and a check valve (54).

6. A solenoid valve (100, 100') comprising:
a valve body (10) having a housing with a first port (20) for receiving fluid from a fluid generating source, a second port (30) for flowing in/flowing out said fluid, and a third port (40) for exhausting said fluid, and a cover (14) hermetically coupled to one end of said housing for closing said one end of said housing;
a barrier wall (34) for partitioning a chamber surrounded by said housing and cover within said valve body into first and second chambers (44, 46) and having a first opening (38) for communicating said first chamber (44) with said second chamber (46), said first chamber (44) being communicated with said first port (20) and said second chamber (46) being communicated with said second and third ports (30, 40);
opening/closing means (22, 24, 26, 32, 34, 42) movable along lengthwise direction of said valve body (10) for alternatively opening and closing said first opening (38) and said third port (40) in response to an electric signal, and being positioned at a first position of closing said third port (40) and opening said first opening (38) in a normal state that said electric signal is not applied, or at a second position of closing said first opening (38) and opening said third port (40) in an active state that said electric signal is applied, whereby said first port (20) is communicated with said second port or said second port (30) is communicated with said third port (40); and
a solenoid assembly (11) having an annular solenoid coil (12), a bobbin (13) wound by said annular solenoid coil and a pair of electrodes electrically connected to said annular solenoid coil and exposed to the outside of said valve body (10)for moving said opening/closing means to said second position from said first position in response to said electric signal.

7. A modulator for an anti-lock braking system comprising four solenoid valves (S1, S2, S3, S4), wherein each of said solenoid valves is comprised of a solenoid valve as claimed in any preceding claim.

8. A modulator as claimed in Claim 7, further comprising an electric motor, and first and second pumps driven by said electric motor.

9. An anti-lock braking system for a vehicle having at least one wheel provided with a wheel brake, and means to control the pressure of said wheel brake, wherein said pressure controlling means comprises a solenoid valve as claimed in any of Claims 1 to 6.

10. An anti-lock braking system as claimed in Claim 9, further comprising a master cylinder arranged to supply brake fluid to activate the wheel brake, said solenoid valve communicating with said master cylinder to control the pressure of the fluid supplied by said master cylinder, and wherein said pressure controlling means further comprises control means arranged to apply control signals to said solenoid valve in response to the speed of said wheel.
